# EUROPÄISCHE PATENTSCHRIFT

(11) **EP 1 060 956 B1**
(45) Veröffentlichungstag und Bekanntmachung des Hinweises auf die Patenterteilung: **18.01.2006**
(21) Anmeldenummer: 00111765.4
(22) Anmeldetag: 03.06.2000
(51) Int. Cl.: B60R 21/06

(54) **Trenneinrichtung mit variabler Rückzugskraft**
Separation device with adjustable retracting force
Dispositif de séparation à force de rappel variable

(30) Priorität: 16.06.1999 DE 19927384
(43) Veröffentlichungstag der Anmeldung: 20.12.2000
(73) Patentinhaber: BOS GmbH & Co. KG, 73773 Aichwald (DE)
(72) Erfinder: Schlecht, Werner P., 71665 Vaihingen/Enz-Aurich (DE); Krause, Beate, 73635 Rudersberg (DE); Seel, Holger, 71134 Aidlingen (DE); Ehrenberger, Marina, 73730 Esslingen (DE)
(74) Vertreter: Rüger, Barthelt & Abel Patentanwälte

(56) Entgegenhaltungen:
- EP-A- 0 565 220
- EP-A- 0 821 130
- US-A- 4 139 231
- US-A- 4 222 601
- US-A- 5 727 836

## Beschreibung

Trenneinrichtungen dienen dazu bei Kombi-Pkw oder ähnlichen Fahrzeugen den Lade- oder Gepäckraum gegenüber dem Fahrgastraum mechanisch abzuschotten. Sie sollen verhindern, dass bei einem Auffahrunfall oder Crash Gegenstände aus dem Laderaum in den Fahrgastraum geschleudert werden und dort Insassen verletzen oder töten. Zu diesem Zweck wird die z.B. über der Kante über der Rücksitzlehne verbleibende Öffnung unterhalb des Dachhimmels mit der Trenneinrichtung verschlossen, wenn eine solche Gefährdung potentiell besteht.

Kann hingegen eine Gefährdung der Insassen mit Sicherheit ausgeschlossen werden, weil die Ladehöhe im Kofferraum die Höhe der Rücksitzkante nicht übersteigt und auch bei einem Auffahrunfall zusammenrutschende Gegenstände sich nicht so anhäufen können bis sie die Rücksitzlehen überklettern können, braucht die Trenneinerichtung nicht verwendet zu werden. Im Gegenteil sie ist dann eher störend.

Aus diesem Grund wird die Trenneinrichtung häufig nach Art eines Springrollos aufgebaut, wobei die Trenneinrichtung ein Trenn-Netz aufweist, das in einem Gehäuse auf einer Wickelwelle aufgewickelt ist. Die Wickelwelle wird mit Hilfe eines Federmotors im Aufwickelsinne vorgespannt und ist so kräftig, dass auch bei vollständig aufgewickelten Trenn-Netz eine hinreichende Rückzugskraft bestehen bleibt.

Bei vollständig aufgewickelten Trenn-Netz ist der Ballendurchmesser groß und die Wickelfeder weitgehend entspannt. Mit zunehmenden Ausziehen des Trennnetzes aus dem Gehäuse verringert sich der Ballendurchmesser auf der Wickelwelle während gleichzeitig die Wickelfeder eine zunehmende Spannung erzeugt.

Am Ende des Auszugweges d.h. dann, wenn eine solche Menge an Trenn-Netz aus dem Gehäuse herausgezogen ist, dass die Zugstange in die karosserieseitigen Aufnahmetaschen eingehängt werden kann, ist die Rückzugskraft auf ein Maß angestiegen, das das Einhängen wesentlich erschwert. Dabei kommt eine ungünstige Körperhaltung hinzu.

Die US 5,727,836 beschreibt eine Laderaumabdeckung für Kombi-PKW. Zu der Laderaumabdeckung gehört eine Kassette, in der eine Wickelwelle drehbar gelagert ist. An der Wickelwelle ist mit einer Kante eine Abdeckplane befestigt, deren anderes Ende mit einem Zugstab verbunden ist. Der Zugstab weist seitliche Verlängerungsstücke auf, die in Führungsschienen laufen können. Die Führungsschienen erstrecken sich unterhalb der hinteren Seitenfenster und oberhalb der Ladebucht.

In den Führungsschienen sind an einer Zwischenposition hakenförmige Taschen vorgesehen, in denen die Endstücke der Führungsstange eingehakt werden können. Auf diese Weise kann die Laderaumabdeckung in einer Zwischenstellung gehalten werden.

Ausgehend hiervon ist es Aufgabe der Erfindung eine Trenneinrichtung zu schaffen, bei der die Rückzugskraft bei einer Auszuglänge, die dem Einhängen in der Karosserie entspricht, verringert ist.

Diese Aufgabe wird erfindungsgemäß durch die Trenneinrichtung mit den Merkmalen des Anspruches 1 gelöst.

Die Trenneinrichtung weist ein Gehäuse auf, in dem eine Wickelwelle drehbar gelagert ist. An der Wickelwelle ist mit einer Kante das Trenn-Netz befestigt, dessen andere zu der Wickelwelle parallele Kante mit einer Zugstange versehen ist. Die Zugstange steht endseitig über das Trenn-Netz über und kann mit entsprechenden Köpfen in karosserieseitigen Aufnahmetaschen eingehängt werden.

Der Wickelwelle ist eine Antriebseinrichtung zugeordnet, die zwischen zwei Zuständen umschaltet. Der eine Zustand ist im Anfangsbereich wirksam d.h. in dem Auszugsweg beginnend mit dem voll eingezogenen Trenn-Netz bis hin zu einer vorgegebenen Auszugslänge. Der zweite Bereich schließt sich daran an. In dem Anfangsbereich ist eine höhere Rückzugskraft wirksam als in dem Bereich nach der vorgegebenen Auszugslänge. Zwischen diesen beiden Zuständen wird abhängig von der Auszugslänge selbsttätig umgeschaltet.

Infolge der Verminderung der Rückzugskraft ab der vorgegebenen Auszugslänge ist die Handhabung beim Einhängen der Zugstange in die karosserieseitigen Aufnahmetaschen wesentlich erleichtert. Bei der Handhabung muss der Benutzer beim Einhängen nurmehr die wesentlich geringere andere Rückstellkraft mit den Händen kompensieren, um ein Zurückwickeln des Trenn-Netzes in das Gehäuse zu verhindern.

Die vorgegebene Auszugslänge bei der die Antriebseinrichtung auf die schwächere Rückzugskraft umschaltet, ist etwas länger als es zum Einhängen der Zugstange in die Karosserie erforderlich ist. Hierdurch werden auch Karosserietoleranzen ausgeglichen.

Um das selbsttätige Umschalten zwischen den unterschiedlichen Rückzugskräften zu bewerkstelligen, werden im einfachst Fall zwei Antriebsfedern verwendet. Diese Antriebsfedern können so gestaltet sein, dass sie unterschiedliche Rückzugskräfte erzeugen.

Diese beiden Antriebsfedern können in zwei unterschiedlichen Weisen mit einander kombiniert werden. Bei der einen Ausgestaltung wird am Ende des Anfangsbereiches also bei der vorgegebenen Auszugslänge die stärkere Feder an dieser Stelle festgehalten, so dass nur noch die andere Antriebsfeder für ein begrenztes Stück wirksam ist, wobei diese andere Antriebsfeder eine kleinere Rückzugskraft erzeugt. Die Folge ist, dass beim Ausziehen die Antriebsfeder mit der geringeren Rückzugskraft gedehnt ist und ihr Hub durch zusätzliche Begrenzungseinrichtungen begrenzt wird.

Die grundsätzlich andere Lösung sieht eine Kompensation vor, d.h. nach Erreichen der vorgegebenen Auszugslänge wird die zweite Antriebsfeder parallel geschaltet und hebt einen Teil der Rückzugskraft der ersten Antriebsfeder auf. In der Summe bleibt damit die gewünschte verringerte Rückzugskraft übrig. In den beiden Fällen ist die verringerte Rückzugskraft lediglich über ein kurzes Stück von ca. 30 mm bis ungefähr maximal 150 mm wirksam. Beim Überschreiten dieser Strecke im Sinnes des Aufwickelns wird lediglich die erste Antriebsfeder wirksam und zieht das Trenn-Netz mit großer Kraft in das Gehäuse zurück.

Die Antriebsfedern können als Schraubenfedern ausgebildet sein, die sich leicht in der Wickelwelle unterbringen lassen, ohne eine nennenswerte Vergrößerung des Platzbedarfes entstehen zu lassen.

Eine andere Möglichkeit besteht darin, wenigstens eine der Antriebsfedern als Spiralfeder ähnlich einer Uhrwerksfeder auszuführen.

Die erfindungsgemäße Trenneinrichtung kann auch so gestaltet werden, dass unterschiedliche Auszugslängen des Trenn-Netzes möglich sind. Die kürzere Auszugslänge wird verwendet, wenn sich das Gehäuse der Trenneinrichtung in der Nähe der Oberkante der aufgerichteten Rücksitzlehne befindet. Die andere größere Auszugslänge kommt hingegen zum Einsatz, wenn das Gehäuse der Trenneinrichtung in der Nähe des Bodens verankert wird, beispielsweise wenn die Rücksitzlehen umgelegt oder gar die Rücksitzbank aufgestellt ist. In diesem Falle ist es sehr hilfreich, wenn die Antriebseinrichtung mit einer Zähleinrichtung versehen ist, die dafür sorgt, dass die Umschaltung auf die geringere Rückzugskraft an genau der Stelle erfolgt, die der kürzeren Auszugslänge entspricht.

Zum Umschalten in den einen oder anderen Betriebszustand wird eine Sperreinrichtung bzw. eine Koppeleinrichtung verwendet, die beide jeweils lösbar sind und die beim Erreichen der vorgegebenen ersten Auszugslänge, die beiden Antriebsfedern miteinander kuppelt bzw. Die eine der beiden Antriebsfedern unwirksam macht. Diese Sperr- bzw. Koppeleinrichtung kann zweckmäßiger Weise auch mit der Zähleinrichtung kombiniert werden.

Eine Löseeinrichtung sorgt dafür, dass die Sperr- bzw. die Koppeleinrichtung unwirksam gemacht werden, und diese Löseeinrichtung wird bei der zweiten vorgegebenen Auszugslänge wirksam.

Die Auslöseeinrichtung umfasst ein Auslöseelement, dass drehfest mit der Wickelwelle verbunden ist.

Im Übrigen sind Weiterbildungen der Erfindung Gegenstand von Unteransprüchen. In der Zeichnung sind Ausführungsbeispiele der Erfindung dargestellt. Es zeigen:
Fig. 1 eine Trenneinrichtung gemäß der Erfindung wie sie an der Rückseite einer Rücksitzlehne befestigt ist, mit ausgezogenem Trenn-Netz zum Einhängen unter dem Dachhimmel, in einer perspektivischen Darstellung,
Fig. 2 das Gehäuse der Trenneinrichtung nach Fig. 1, in einem schematisierten Längsschnitt,
Fig. 3 einen Teil der Kulisseneinrichtung zum Kuppeln der beiden Antriebsfedern, in einer Draufsicht,
Fig. 4 den Schieber der Sperreinrichtung, in einer Draufsicht,
Fig. 5 die rechte der beiden Endkappen der Darstellung aus Fig. 2, in einer Draufsicht,
Fig. 6 die mit der Wickelwelle gekuppelte Auslöseeinrichtung, in einer Draufsicht, und
Fig. 7 ein anderes Ausführungsbeispiel der erfindungsgemäßen Trenneinrichtung unter Verwendung einer kompensierenden Antriebsfeder in einer schematisierten, perspektivischen Explusionsdarstellung

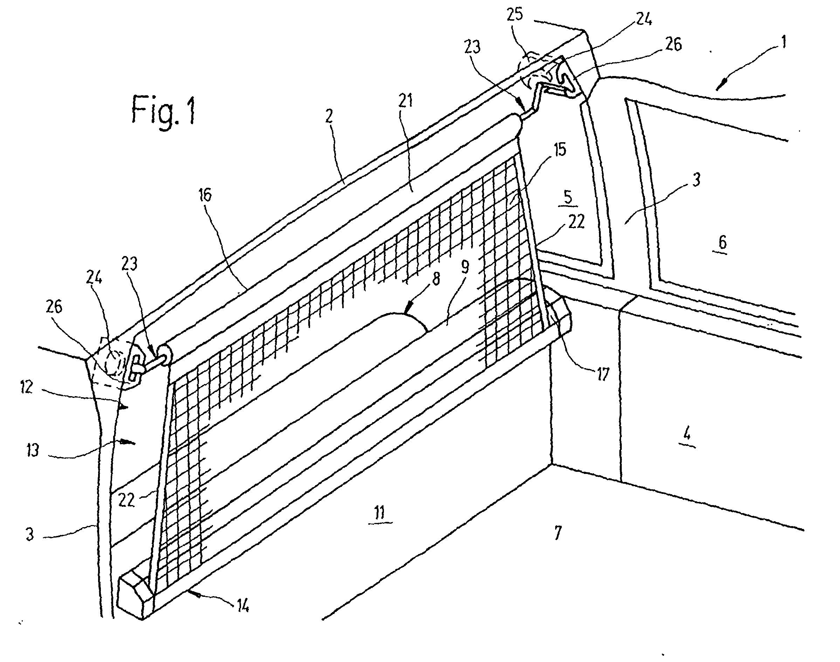

Fig. 1 zeigt in aufgebrochener Darstellung einen Heckbereich 1 eines Kombi-PKWs. Der Heckbereich 1 ist perspektivisch etwa aus der Sicht des weggebrochenen linken seitlichen Heckfensters dargestellt und weist ein Dach 2 auf, das seitlich von zwei C-Säulen 3 getragen wird. Vor der C-Säule 3 liegt unterhalb des Daches 2 und oberhalb einer Seitenwand 4 ein hinteres Seitenfenster 5, während hinter der C-Säule 3 ein weiteres hinteres Seitenfenster 6 angeordnet ist. Die Anordnung der Seitenfenster 5 und 6 ist auf der linken Seite des Heckbereiches spiegelbildlich zu denken. Nach unten wird der Heckbereich 1 von einer im Wesentlichen ebenen Ladefläche 7 abgeschlossen.

Zwischen den beiden hinteren Seitenfenstern 5 befindet sich auf der Höhe der C-Säulen 3 eine Rücksitzbank 8, deren Rücksitzlehne 9 mit einer Rückseite 11 etwa zwischen den beiden C-Säulen 3 steht.

Zwischen der Unterkante des Daches 2 und der Oberkante der Rücksitzlehne 9 befindet sich eine Öffnung 12, über die ein vor der Rücksitzlehne 9 befindlicher Fahrgastraum mit dem dahinter befindlichen Laderaum des Heckbereiches 1 in Verbindung steht.

Um zu verhindern, dass bei einem Crash Gegenstände aus dem Heckbereich 1 in den Fahrgastraum geschleudert werden, wird die Öffnung 12 durch eine Trenneinrichtung 13 verschlossen. Zu der Trenneinrichtung 13 gehören ein Gehäuse 14, ein Sicherheitsnetz 15 und eine an dem Trenn-Netz 15 angebrachte Zugstange oder Strebe 16.

Das Gehäuse 14 ist ein längliches, kastenförmiges Gehäuse, das an seiner Oberseite mit einem über die gesamte Länge durchlaufenden Auslaufschlitz 17 versehen ist. Im Inneren des Gehäuses 14 befindet sich eine Antriebseinrichtung 18, um eine drehbar gelagerte Wickelwelle 19 im Sinne des Aufwickelns des Trenn-Netzes 15 vorzuspannen. Das Gehäuse 14 ist an der Rückseite 11 der Rücksitzlehne 9 lösbar befestigt.

Das Trenn-Netz 15 ist mit einer Kante mit der Wickelwelle 19 verbunden und führt, ausgehend von der Wickelwelle 19, durch den Auslaufschlitz 17 aus dem Gehäuse 14 heraus. Die zu der Wickelwelle 19 parallele Kante des Trenn-Netzes 15 ist mit einer Schlaufe 21 versehen, die über die gesamte Breite des etwa trapezförmigen Trenn-Netzes 15 durchläuft. In der Schlaufe steckt die Strebe 16.

Der Vollständigkeit halber ist an dieser Stelle noch erwähnt, dass das Trenn-Netz 15 an seinen beiden seitlichen Kanten durch Einfassbänder 22 verstärkt ist.

Aus der Zugstange bzw. Strebe 16 stehen an beiden Enden Verankerungsglieder 23 vor, die pilzförmige Köpfe 24 tragen. Die pilzförmigen Köpfe 24 sind bei aufgespanntem Trenn-Netz 15 in endseitig verschlossene T-förmige Nuten 25 von Aufnahmetaschen 26 eingeführt. Die Aufnahmetaschen 26 befinden sich knapp unterhalb der Dachunterkante 2.

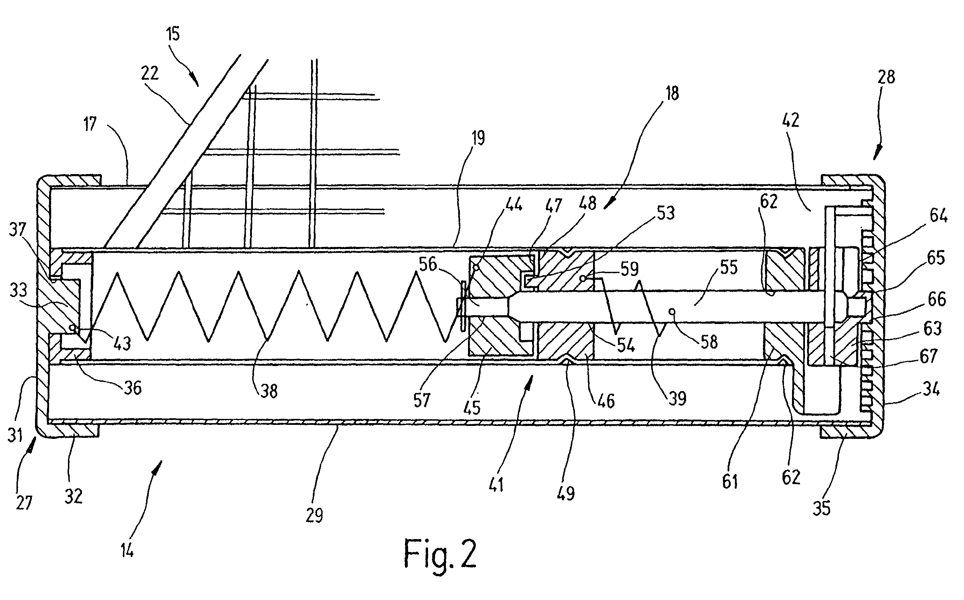

Fig. 2 zeigt in einem stark schematisierten Längsschnitt den Aufbau des Gehäuses 14. Zu dem Gehäuse 14 gehören zwei becherförmige Endkappen 27 und 28 sowie ein dazwischen sich erstreckendes rohrförmiges Gehäusemittelstück 29, in dem der Auslaufschlitz 17 ausgebildet ist.

Die Endkappe 27 besteht aus einem im wesentlichen ebenen Boden 31, der randseitig von einem Kragen 32 umgeben ist, der mit Ausnahme des Auslaufschlitzes 17 allseitig geschlossen ist.

Aus der Innenseite d.h. der dem Gehäusemittelstück 29 gegenüberliegenden Seite des Bodens 31 steht ein angeformter zylindrischer Zapfen 33 vor, der als Lagerzapfen für die Wickelwelle 19 dient.

Die Kappe 28 am anderen Ende hat einen grundsätzlich ähnlichen Aufbau und sie besteht aus einem Boden 34, an den einstückig ein umlaufender Kragen 35 angeformt ist, der wiederum mit Ausnahme des Auslaufschlitzes 17 durchgehend ausgebildet ist.

Die Wickelwelle 19 ist ein zylindrisches Metallrohr, das sich im wesentlich zwischen den beiden Endkappen 27 und 28 erstreckt. In dem linken Ende der Wickelwelle 19 steckt ein Reduzierstück 36 mit einer zu der Wickelwelle 19 koaxialen Bohrung 37, die auf dem Lagerzapfen 33 drehbar sitzt.

Im Inneren der Wickelwelle 19 befindet sich die bereits erwähnte Antriebseinrichtung 18. Zu dieser Antriebseinrichtung gehören eine erste Antriebsfeder 38 in Gestalt einer Wickelfeder, eine zweite Antriebsfeder 39, ebenfalls in Gestalt einer Wickelfeder, eine Koppeleinrichtung 41, die als Hubbegrenzungseinrichtung wirt, sowie eine Sperreinrichtung 42. Die zweite Antriebsfeder 39 erzeugt ein geringeres Drehmoment an der Wickelwelle 19 als die erste Antriebsfeder 38.

Die erste Antriebsfeder 38, die als Antriebsfeder für die Wickelwelle 19 dient, ist einenends bei 43 mit dem Lagerzapfen 33 verbunden. Ihr anderes Ende ist bei 44 mit der Koppeleinrichtung 41 verbunden. Die Koppeleinrichtung 41 besteht aus zwei Zylinderstücken 45 und 46, die sich mit ihren Stirnseiten 47 und 48 gegenüberstehen und gegeneinander begrenzt drehbar sind. Das Zylinderstück 45 hat einen kleineren Durchmesser als es der Lichtenweite der Wickelwelle 19 entspricht, so dass das Zylinderstück 45 gegenüber der Wickelwelle 19 frei drehbar ist. An diesem Zylinderstück 45 ist das Federende 44 befestigt.

Das Zylinderstück 46 dagegen ist mit Hilfe von Einprägungen 49 in der Wickelwelle 19 drehfest gehalten und zwar so, dass sich die beiden Stirnseiten 47 und 48 mit einem geringen Spalt gegenüberstehen.

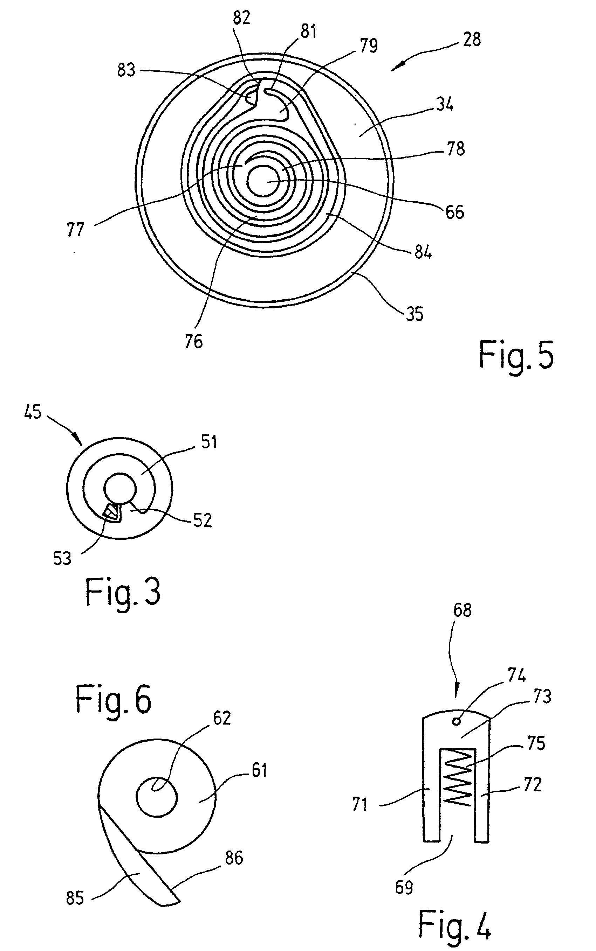

In der planen Stirnfläche 47 ist, wie Fig. 3 zeigt, eine zu der Außenumfangsfläche des Zylinderstücks 45 konzentrische Ringnut 51 enthalten, die nahezu einen Vollkreis beschreibt. Die Nut 51 ist durch einen schmalen radial verlaufenden Steg 52 unterbrochen.

Auf der gegenüberliegenden ebenfalls planen Stirnseite 48 ist das Zylinderstück 46 mit einer Mitnehmernase 53 versehen, die in die Nut 51 eintaucht. Auf diese Weise begrenzen die beiden Zylinderstücke 45 und 46 gemeinsam den Hub der Antriebsfeder 39.

In dem Zylinderstück 46 ist eine zu der Wickelwelle 19 koaxiale Bohrung 54 enthalten, durch die eine zylindrische Koppelwelle 55 hindurchführt. Die Koppelwelle 55 ist an ihrem linken Ende mit einem verjüngten Abschnitt 56 versehen, der drehfest in einer koaxialen Bohrung 57 des Zylinderstücks 45 steckt. Die Koppelwelle 55 und das Zylinderstück 45 sind auf diese Weise in axialer Richtung und in Umfangsrichtung fest miteinander verbunden. Die Koppelwelle 55 verläuft koaxial zu der Wickelwelle 19 und erstreckt sich ausgehend von der Koppeleinrichtung 41 in Richtung auf die Endkappe 28.

Die bereits erwähnt zweite Antriebsfeder 39, die ebenfalls als Schraubenfeder ausgebildet ist, ist mit einem Ende 58 an der Koppelwelle 55 und mit dem anderen Ende 59 an dem Zylinderstück 56 verankert. Damit ist die Antriebsfeder 39 getrieblich zwischen der Koppelwelle 55 und der Wickelwelle 19 wirksam.

Zur Führung der Koppelwelle 55 in dem rechten Ende der Wickelwelle 19 enthält die Wickelwelle 19 in ihrem der Endkappe 28 benachbarten Ende ein Füllstück 61 mit einer koaxialen Bohrung 62 durch die Koppelwelle 55 frei drehbar hindurch führt. Das Füllstück 61 ist mit Hilfe von Einprägungen 62 drehfest in der Wickelwelle 19 festgelegt.

Die Koppelwelle 55 steht mit ihrem rechten Ende über das Füllstück 61 axial über und trägt auf dem axial überstehenden Teil ein Schiebergehäuse 63, das mit der Koppelwelle 55 ebenfalls fest verbunden ist. An dem Schiebegehäuse 63 ist an dessen dem Boden 34 der Endkappe 28 gegenüberliegenden Planfläche 64 ein Lagerzapfen 65 ausgebildet, der in einer entsprechenden Lagerbohrung 66, die als Sackbohrung gestaltet ist, gelagert ist. Die Sackbohrung 66 befindet sich auf der dem Gehäusemittelstück zugekehrten Seite des Bodens 34.

Durch das Schiebegehäuse 63 läuft ein Schieberkanal 67, der einen im wesentlichen rechteckigen Querschnitt aufweist. Der Schieberkanal 67 erstreckt sich radial und rechtwinkelig bezogen auf die Achse der Koppelwelle 55. In seinem in der Zeichnung oberhalb der Koppelwelle 55 befindlichen Abschnitt ist der Schieberkanal 67 mit einer zylindrischen Erweiterung versehen, die von der Außenumfangsfläche des Schiebergehäuses 63 bis zu der Koppelwelle 55 reicht. Außerdem öffnet er sich in diesem Bereich mittels eines Schlitzes zu der Endkappe 28.

In dem Schieberkanal 67 sitzt verschieblich ein Schieber 68 wie er in Fig. 4 gezeigt ist. Der Schieber 68 hat eine flache rechteckige Gestalt mit einem Querschnitt entsprechende dem Querschnitt des Schieberkanals 67.

Der Schieber 68 ist von einer Seite her mit einem parallelflankigen Schlitz 69 versehen, wodurch zwei Schenkel 71 und 72 gebildet werden, die an einem Ende über einen Rücken oder Brücke 73 miteinander verbunden sind. Die Weite des Schlitzes 69 entspricht dem Außendurchmesser der Koppelwelle 55 im Bereich des Schieberkanals 67. Schließlich trägt der Schieber 68 im Bereich des Rückens 73 einem Führungsbolzen 74, der sich parallel zu der Achse der Koppelwelle 55 erstreckt und in Richtung auf die Endkappe 28 zeigt.

Mit Hilfe eine Druckfeder 75, die in dem Schlitz 69 enthalten ist, wird der Schieber 68 radial nach außen vorgespannt. Die Druckfeder 75 in Gestalt einer Schraubenfeder sitzt in der bereits erwähnten zylindrischen Erweiterung des Schieberkanals 67 und stützt sich einenends auf dem Außenumfang auf der Koppelwelle 55 und anderenends am Grund des Schlitzes 69 ab.

Auf der dem Gehäusemittelstück 29 zugekehrten Innenseite des Bodens 34 ist gemäß Fig. 5 eine spiralförmige Nut 67 ausgebildet, die einer rechtsgängigen Archimedes-Spirale folgt. Die spiralförmige Nut 67 mündet an ihrem radial innen liegendem Ende 77 in einen zylindrischen Raum 78, der konzentrisch die Lagerbohrung 66 umgibt. Die Tiefe der Nut 67 so wie ihre Weite ist an die Geometrie des Führungszapfens 74 angepasst.

An ihrem radial außenliegenden Ende geht die Nut 76 in eine der Nut 76 zugekehrte Tasche 79 über. Die Tasche 79 wird radial außen von einer Wand 81 begrenzt, deren Abstand von der Wand der Nut größer ist als die Weite der Nut 76 sonst. Mit dem freien Ende der Wand 81 fluchtet eine Blattfeder 82, die bei 83 in der radial außen liegenden Wand der Nut 76 verankert ist. Zwischen der Blattfeder 82 und der Wand 81 verbleibt ein Spalt entsprechend dem Durchmesser des Führungszapfens 74, und die Blattfeder 82 überquert eine weitere endlose Nut 84, die die außen liegende Wand der Nut 76 eiförmig umgibt. Die Blattfeder 82 dient als Weiche, wie weiter unten noch erläutert wird.

In Fig. 6 ist das Füllstück 61 in einer Stirnansicht zu erkennen. Ersichtlicherweise ist das Füllstück 61 mit einem tangential verlaufenden Arm 85 versehen, der eine der Achse der Wickelwelle 19 zugekehrte gerade Führungsfläche 86 trägt. Das radial außenliegende Ende der Führungsfläche 86 hat von der Achse der Wickelwelle 19 einen radialen Abstand, der größer ist als der radiale Abstand der Achse der Lagerbohrung 66 von dem entferntest liegendem Punkt der äußeren in sich geschlossenen eiförmig verlaufenden Nut 84.

Die Funktionsweise der beschriebenen Anordnung ist wie folgt:

Im eingefahrenen Zustand der Trenneinrichtung 13 liegt die Zugstange 16 des Trenn-Netzes 15 an dem Auslaufschlitz 17 an und blockiert ein weiteres Einziehen des Trenn-Netzes 15 in das Gehäuse 14. Dieses Einziehen wird von der Antriebsfeder 38 bewerkstelligt. Die Antriebsfeder 38 ist bestrebt die Wickelwelle 19 bezogen auf die Darstellung so zu drehen, dass sich die Oberseite der Wickelwelle 19 vom Betrachter weg bewegt. Die Mitnahme der Wickelwelle 19 geschieht, indem sich der Steg 52 des Zylinderstücks 45 an dem Mitnehmerzapfen 53 anlegt, und zwar auf derjenigen Seite wie dies in Fig. 3 veranschaulicht ist.

Wenn sich die Wickelwelle 19 in der Stellung befindet, in der das Trenn-Netz 15 vollständig eingezogen ist, befindet sich der Führungszapfen 74 des Schiebers 68 in dem zylindrischen Bereich 78 der Endkappe 28. In dieser Stellung ist außerdem die zweite Antriebsfeder 39 gespannt und die Führungsfläche 86 hat von dem Schieber 68 den größten Abstand in Umfangsrichtung.

Wenn ausgehend von dieser Stellung das Trenn-Netz 15 herausgezogen wird, wird hierdurch die Wickelwelle 19 entgegen der Wirkung der Antriebsfeder 38 in Umdrehungen versetzt. Beim Herausziehen ändert sich an der Relativlage zwischen dem Mitnehmerzapfen 53 und dem Steg 52 nicht. Die Drehung der Wickelwelle 19 wird unmittelbar auf das Zylinderstück 45 übertragen. Da das Zylinderstück 45 drehfest mit der Koppelwelle 25 verbunden ist, dreht sich in dem gleichen Richtungssinn wie die Wickelwelle 19 auch der Schieber 68 in dem Schieberkanal 67 um die Achse der Wickelwelle 19.

Beim Ausziehen des Trenn-Netzes 15 beschreibt der an dem Schieber 68 sitzende Führungszapfen 74 eine Bewegung im Uhrzeigersinne bezogen auf die Darstellung von Fig. 5. Der Führungszapfen 74 wird also nach einer mehr oder weniger großen Teilumdrehung aus dem zylindrischen Raum 78 zu dem Anfang 77 der spiralförmigen Nut 76 gelangen. Durch die Druckfeder 75 wird er radial nach außen gedrückt, so dass er ohne weiteres bei seiner Bewegung um die Achse der Wickelwelle 19 in die Nut 67 findet.

Nach ca. Zwei Umdrehungen der Wickelwelle 19 befindet sich der Führungszapfen 74 in dem radial außen liegenden Teil der spiralförmigen Nut 76 in einem Abstand von der Tasche entsprechend einem Zentriwinkel von ca. 30°.

Wenn die Wickelwelle noch diese weiteren ca 30° gedreht wird, schlägt der Zapfen 74 in der Tasche 79 an und blockiert damit eine weitere Drehbewegung der Wickelwelle 19. In diesem Zustand ist eine ausreichende Länge des Trenn-Netzes 15 von der Wickelwelle 19 abgewickelt, was dem Benutzer durch das Fangen des Zapfens 74 in der Tasche 79 deutlich signalisiert wird. Die abgewickelte Länge ist größer als es dem Abstand zwischen dem Auslaufschlitz 17 und den Ausnahmetaschen 26 entspricht. Wenn der Benutzer ausgehend von dieser Stellung ein kurzes Stück weit das Trenn-Netz 15 wieder in das Gehäuse 14 zurück laufen lässt, schlägt der Führungszapfen 74 an der gegenüberbefindlichen Blattfeder 82 an. Da die Druckfeder 75 weiterhin bestrebt ist, den Schieber 68 zusammen mit dem Führungszapfen 74 nach außen zu drücken, gleitet der Führungsbolzen 74 längs der etwas schräg gestellten Blattfeder 82 gegen die Außenwand der äußeren Nut 84.

Da die Blattfeder 82 eine Bewegung des Führungszapfens 74 in Richtung entgegen dem Uhrzeigersinne blockiert, wird der Zapfen 74 in der Nut 84 gegen die Blattfeder 82 gedrückt gehalten. Damit ist zunächst einmal eine Drehung der Koppelwelle 55, die drehfest mit dem Schieber 68 verbunden ist, blockiert. Die Koppelwelle 55 kann sich nicht mehr drehen, womit die von der Antriebsfeder 38 ausgeübte Kraft von der Blattfeder 82 in die Endkappe 78 damit das Gehäuse 14 eingeleitet wird. Der Benutzer fühlt an der Zugstange 16 nur noch die Kraft, die von der schwächeren zweiten Antriebsfeder 39 auf die Wickelwelle 19 ausgeübt wird.

Gedanklich lässt sich der Vorgang so zerlegen, als würde nur noch die zweite Antriebsfeder 39 wirksam sein, die sich über die Koppelwelle 55 den Schieber 68, den Führungszapfen 74 an der Endkappe 28 abstützt.

Der Benutzer kann nun ohne weiteres die Zugstange 16 in die Aufnahmetaschen 26 einhängen. Er ist nicht mehr gezwungen von Hand die Kraft zu kompensieren, die von der wesentlich stärkeren und inzwischen über mehrere Umgänge ausgezogenen Antriebsfeder 38 auf das Trenn-Netz 15 ausgeübt wird.

Der mögliche Hub über den die schwächere zweite Antriebsfeder 39 wirksam ist, entspricht etwa einer 270° Drehung der Wickelwelle 19 d.h. einem Längenstück von etwa 70 mm bis 110 mm bezogen auf das ausgestreckte Trenn-Netz 15. Dieser Hub reicht aus, um Abstandstoleranzen zwischen den Aufnahmetaschen 26 und der Verankerung des Gehäuses 14 an der Rücksitzlehne 8 und Schwankungen im Ballendurchmesser des aufgewickelten Teils des Trenn-Netzes 15 auszugleichen.

Wenn der Benutzer das Trenn-Netz 15 wieder vollständig einfahren will, nimmt er die Zugstange 16 aus den Aufnahmetaschen 26 heraus und lässt das Trenn-Netz 15 weiter auf die Wickelwelle 19 aufwickeln.

Die Aufwickelkraft kommt im ersten Teil des Einfahrhubs nur durch die schwächere Antriebsfeder 39 zu Stande. Bei dieser weiteren Einfahrbewegung bewegt sich die Führungsfläche 68, die mit der Wickelwelle 19 drehfest gekoppelt ist, auf den Schieber 68 zu. Nach einem entsprechenden Hub wird die tangential verlaufende Führungsfläche 86 mit dem Schieber 68 in Eingriff kommen.

Die Führungsfläche 86 bewegt sich, würde sie auf die Darstellung von Fig. 5 projiziert werden, beim Aufwickeln des Trenn-Netzes 15 im Gegenuhrzeigersinne und sie würde projiziert auf die Darstellung von Fig. 5 von links oben nach rechts unter verlaufen. Hierdurch erzeugt sie an dem Schieber 68 eine radial nach innen gerichtet Kraft, die größer ist, als die radial nach außen wirkende Kraft der Druckfeder 75.

Die Führungsfläche 86 wird entgegen der Wirkung der Druckfeder 75 den Schieber 68 radial nach innen drücken, wobei der Führungszapfen 74 an der schrägstehenden Blattfeder 82 radial nach innen gleitet und in den radial außen liegenden Anfang der spiralförmig verlaufenden Nut 76 findet. Dadurch ist die Blockade der Koppelwelle 55 aufgehoben und sie wird sich angetrieben durch die viel kräftigere erste Antriebsfeder 38 im Gegenuhrzeigersinn drehen, bis der Steg 52 wieder wie in Fig. 3 gezeigt an dem Mitnehmerzapfen 53 zur Anlage kommt. Während dieses Übergangs zieht die kräftigere Antriebsfeder 38 die schwächere Antriebsfeder 39 erneut auf, die sich während der vorausgegangenen Einführbewegung zunehmend entspannt hat.

Das weitere Aufwickeln geschieht von nun an nur noch ausschließlich durch die Wirkung der ersten kräftigeren Antriebsfeder 38.

Wie sich aus der Funktionsbeschreibung ergibt, wirkt die spiralförmige Nut 76 zusammen mit der Tasche 79 wie ein Zählwerk, das die Anzahl der Umdrehungen der Wickelwelle 19 erfasst, um dem Benutzer zu signalisieren, dass nun eine ausreichende Menge an Trenn-Netz 15 von der Wickelwelle 19 abgezogen ist, um ein komfortables Einhängen der Zugstange 16 in den Aufnahmetaschen 26 zu ermöglichen. Wenn diese Zählfunktion nicht gewünscht wird, weil die Signalisierung der ausreichend abgezogenen Menge an Trenn-Netz 15 anders erfolgt, kann die gesamte Struktur, die die spiralförmige Nut 76 definiert an der Innenseite der Endkappe 28 weggelassen werden. Es würde genügen, wenn einfach nur ein Anschlag entsprechend der Blattfeder 82 vorhanden wäre.

Bei der oben angegebenen Funktionsbeschreibung wurde davon ausgegangen, dass das Trenn-Netz 15 nur die Öffnung oberhalb der aufgerichteten Rücksitzlehen 9 verschließen soll. An diese Länge/Menge an Trenn-Netz 15 ist die Länge der spiralförmig verlaufenden Nute 76 bis hin zu der Tasche 79 angepasst.

Benötigt der Benutzer den vollen Laderaum des Pkw und will deswegen die Rücksitzlehne 9 umlegen sowie gegebenfalls auch die Rücksitzbank 8 aufstellen, muss das Gehäuse 14 in der Nähe des Bodens des Laderaums befestigt werden mit der Folge, dass eine größere Menge an Trenn-Netz 15 erforderlich ist, um die Öffnung zum Fahrgastraum zu verschließen.

In diesem Fall wird zunächst das Trenn-Netz 15 aus dem Gehäuse 14 wie zuvor beschrieben herausgezogen, bis der Führungszapfen 74 sich in der Tasche 79 fängt. Der Benutzer lässt jetzt die Spannung in dem Trenn-Netz 15 etwas nach und ermöglicht es dem Führungszapfen 74 längs der Blattfeder 82 gegen die Außenwand der äußeren Führungsnute 84 zu gleiten. Der Benutzer kann nun das Trenn-Netz 15 weiter aus dem Gehäuse 14 herausziehen, wobei der Führungszapfen 74 durch die äußere Nut 84 läuft. Die Blattfeder 82 ist so gestaltet, dass sie den Bewegungsweg für den Führungszapfen 74 frei gibt, wenn sich dieser bezogen auf Fig. 5 von links her also von der Rückseite her der Blattfeder 82 nähert. Die Blattfeder 82 klappt nach Art einer Weiche um und lässt den Führungszapfen 74 passieren. Auf diese Weise kann eine beliebige Menge von Trenn-Netz 15 von der Wickelwelle 18 abgezogen werden.

Beim Einlaufenlassen des Trenn-Netzes 15 bewegt sich der Führungszapfen 74 im Gegenuhrzeigersinne durch die Nut 84 und wird umgehend nach maximal einer Umdrehung der Wickelwelle 18 an der Blattfeder 82 unter zu Hilfenahme der Führungsfläche 86 in die innere spiralförmig verlaufende Nut 67 umgelenkt. Nach maximal weiteren zweieinhalb Umdrehungen befindet sich der Führungszapfen 74 in dem zylindrischen Bereich 78, so dass die Wickelwelle 18 ungehindert beliebig viele Umdrehungen vollführen kann, um die gesamte abgezogene Menge an Trenn-Netz 15 aufzuwickeln.

Bei dem beschriebenen Ausführungsbeispiel der Trenneinrichtung 13 sind die beiden Federn 38 und 39 kinematisch in Serie geschaltet. Die zweite Feder 39 ist schwächer und deren Überdehnung beim Ausziehen des Trenn-Netzes 15 wird durch die Koppeleinrichtung 41 begrenzt, die eine Relativdrehung zwischen der Koppelwelle 55 und der Wickelwelle 19 von nicht ganz 360° zulässt. Am Ende des vorgegebenen Auszugwegs wird die von der ersten Antriebsfeder 38 ausgeübten Rückzugskraft blockiert, damit die schwächere Rückzugskraft entsprechend der zweiten Antriebsfeder 39 wirksam werden kann.

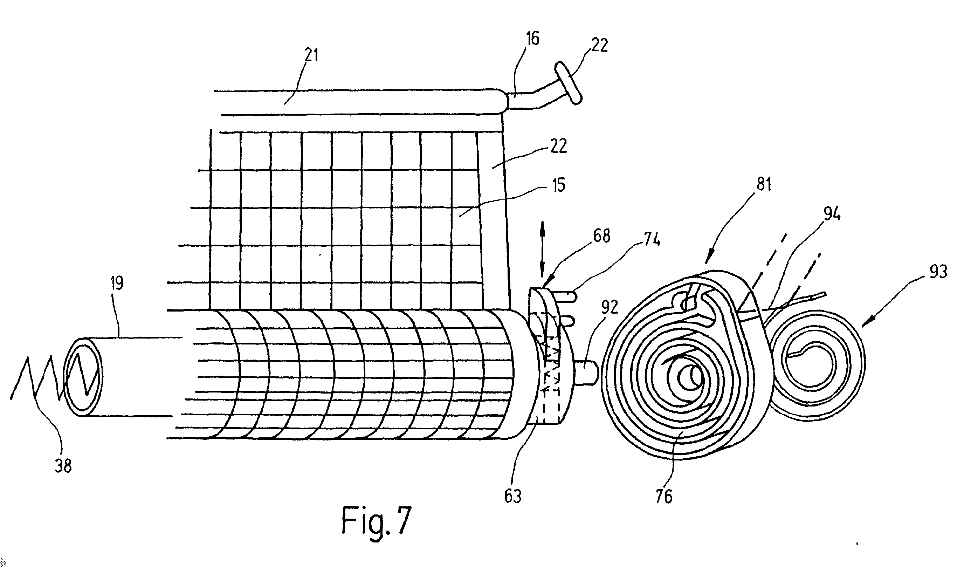

Eine geringere Betätigungskraft für das Trenn-Netz 15 lässt sich aber nicht nur erreichen durch die Serienschaltung von zwei Antriebsfedern, sondern auch durch eine gesteuerte Parallelschaltung von zwei Antriebsfedern und zwar so, dass in dem interessierenden Auszugsbereich des Trenn-Netzes 15 eine zweite Feder parallel geschaltet ist, die einen Teil der Rückzugskraft der eigentlichen Antriebsfeder aufhebt. Ein solches Ausführungsbeispiel ist stark schematisiert in Fig. 7 gezeigt, wobei bereits beschriebene und kinematisch-ähnlich wirkende Bauelemente mit demselben Bezugszeichen versehen sind.

Bei dem Ausführungsbeispiel nach Fig. 7 wird die Wickelwelle 19 in bekannter Weise nur durch eine Antriebsfeder, die beispielsweise der Antriebsfeder 38 entspricht, in Umdrehungen versetzt. Ein Ende der Antriebsfeder 38 ist unmittelbar an dem Gehäuse 14 festgesetzt, während das andere Ende direkt mit der Wickelwelle 19 verbunden ist.

Wie beim vorhergehenden Ausführungsbeispiel ist ein Schiebegehäuse 63 vorhanden, das nun jedoch starr mit der Wickelwelle 19 verbunden ist. In dem Schiebegehäuse 63 ist der Schieber 68 geführt, dessen Führungszapfen 74 die spiralförmig verlaufende Nute 76 abfühlt.

Im Unterschied zu dem vorherigen Ausführungsbeispiel, bei dem die spiralförmige Nut 76 sowie die äußere umlaufende Nut 84 starr mit der Endkappe 28 verbunden waren, sitzen bei dem Ausführungsbeispiel nach Fig. 7 die Nuten 76 und 84 in einem separaten Nutengehäuse 91, das freidrehbar auf einem Wellenzapfen 92 der Wickelwelle 19 gelagert ist.

Das Nutengehäuse 91 wird mittels einer Spiralfeder 93 innerhalb der Endkappe 28 in eine Endlage vorgespannt, die einer Lage der Nuten 76 und 84 entspricht, wie sie in Fig. 5 gezeigt ist. Die Spiralfeder 93 ist kinematisch zwischen dem Nutengehäuse 91 und der nicht veranschaulichten Endkappe 28 wirksam. Entgegen der Wirkung der Feder 83 kann das Nutengehäuse 91 wiederum projiziert auf die Darstellung nach Fig, 5 im Gegenuhrzeigersinne gedreht werden und zwar entsprechend einem Drehwinkel von etwas weniger als 360°.

Das von der Spiralfeder 93 erzeugte Drehmoment ist kleiner als das Drehmoment das von der Antriebsfeder 38 erzeugt wird, wenn eine solche Menge an Trenn-Netz 15 abgezogen ist, dass die Zugstange 16 bequem in die Aufnahmetaschen 26 eingehängt werden kann.

Die Wirkungsweise dieses zweiten Ausführungsbeispiels ist wie folgt, wobei wiederum vom vollständig eingefahrenen Zustand ausgegangen wird:

Im eingefahrenen Zustand befindet sich der Führungszapfen 74 in dem zylindrischen Innenraum 38 und die Spiralfeder 93 spannt das Nutengehäuse 91 in die Endlage vor, so dass sich eine Konfiguration entsprechend der Darstellung nach Fig. 5 ergibt. Beim Herausziehen des Trenn-Netzes 15 bewegt sich der Führungszapfen 74 längs der spiralförmigen Nut 76 nach außen, bis er sich in der Tasche 79 fängt. Der Benutzer lässt wiederum die Spannung in dem Trenn-Netz 15 etwas nach, damit die Wickelfeder 38 die Wickelwelle 19 im Aufwickelsinne bewegen kann, wodurch der Führungszapfen 74 längs der Blattfeder 82 gegen die äußere Wand der Nut 84 drückt, die gleichzeitig die Außenwand des Nutengehäuses 91 ist. Nunmehr wirkt das Drehmoment der Wickelfeder 38, die Wickelwelle 19 im Aufwickelsinne drehen will, entgegen dem Drehmoment das die Spiralfeder 93 auf das Nutengehäuse 91 ausübt. Der Benutzer spürt somit an der Zugstange 16 eine Kraft, die der Differenz zwischen den Drehmomenten entspricht, wie sie die aufgezogene Antriebsfeder 38 und die Spiralfeder 93 ausüben. Die Bedienung ist in der gleichen Weise komfortabel, wie diese für das Ausführungsbeispiel nach Fig. 2 gilt.

Wenn der Benutzer das Trenn-Netz 15 wieder einlaufen lassen will, hängt er die Zugstange 16 aus den Aufnahmetaschen 26 aus und führt die Zugstange 26 in Richtung auf den Auslaufschlitz 17. Dabei wird die Wickelwelle 19 im Aufwickelsinne in Umdrehungen versetzt, weil die Antriebsfeder 38 ein größeres Drehmoment erzeugt, als die entgegenwirkende Spiralfeder 93. Der Führungszapfen 74 nimmt das Nutengehäuse 91 mit, d.h. bezogen auf Fig. 5 würde er das Nutengehäuse 91 im Gegenuhrzeigersinne mitdrehen. Im Verlauf der Drehung stößt der Führungszapfen 74 an eine gestrichelt gezeichnete Rampe 94 an, die ortsfest in der Endkappe 28 angebracht ist. Die Führungsrampe 94 drückt den Führungszapfen 74 radial nach innen, wodurch er längs der Blattfeder 82 in die spiralförmige Nut 76 zurückfindet. Dadurch wird die Wirkung der kompensierenden Feder 93 aufgehoben, die das Nutengehäuse 91 in die Ausgangsstellung entsprechend Fig. 7 zurückdreht. Die Wickelwelle 18 wird jetzt nur noch durch die Wirkung der Antriebsfeder 38 in Umdrehungen versetzt.

Bei einer Trenneinrichtung 13 ist in einem Gehäuse 14 eine Wickelwelle 19 drehbar angeordnet. Auf der Wickelwelle 19 ist ein Trenn-Netz 15 aufwickelbar, das in dem Raum zwischen dem Gehäuse 14 der Trenneinrichtung 13 und dem Dachhimmel eines Pkw aufgespannt werden kann.

Da die Wickelfeder 19 mit zunehmenden Abziehen des Trenn-Netzes 15 ein größeres Drehmoment erzeugt, dem der Benutzer entgegenwirken muss, ist eine Antriebseinrichtung 18 vorgesehen, die dafür sorgt, dass ab einer vorgegebenen Auszuglänge das Antriebsdrehmoment für die Wickelwelle 19 auf ein reduziertes Maß umgeschaltet wird. Diese Umschalten wird entweder bewerkstellig, indem eine zweite schwächere Antriebsfeder 39 wirksam gemacht wird oder indem der Antriebsfeder 38 für die Wickelwelle 19 eine zweite Antriebsfeder 93 parallel geschaltet wird. Beide Hilfsfedern 39, 93 arbeiten nur über einen begrenzten Drehbereich der Wickelwelle 19. Nach Überschreiten dieses Bereiches im Aufwickelsinne wird wieder die volle Wickelkraft der Hauptfeder 38 wirksam.

## Patentansprüche

1. Trenneinrichtung (9) für Kraftfahrzeuge, insbesondere für Kombi-PKW, um bei einem Auffahrunfall Gegenstände aus einem Koffer- oder Gepäckraum daran zu hindern, in den Fahrgastraum geschleudert zu werden,
mit einem Gehäuse (14), das einen parallel zu der Länge des Gehäuses (14) sich erstreckenden Auslaufschlitz (17) aufweist,
mit einer in dem Gehäuse (14) drehbar gelagerten Wickelwelle (19),
mit einem Trenn-Netz (15), das durch den Auslaufschlitz (17) verläuft und das zwei voneinander beabstandete Längskanten aufweist, von denen eine an der Wickelwelle (19) befestigt ist und die andere mit einem Zugstab (16) verbunden ist, der in der Karosserie einzuhängen ist, und,
mit einer der Wickelwelle (19) zugeordneten Antriebseinrichtung (18), um auf die Wickelwelle (19) im Sinne eines Aufwickelns des Trenn-Netzes (15) vorzuspannen und dadurch eine Rückzugskraft für das Trenn-Netz (15) zu erzeugen,
wobei die Antriebseinrichtung (18) wenigstens zwei Betriebszustände aufweist, von denen der eine einer stärkeren Rückzugskraft und der andere einer schwächeren Rückzugkraft entspricht und von denen der eine Zustand in einem Anfangsbereich zwischen der vollständig eingezogenen Stellung des Trenn-Netzes (15) bis zu einer ersten vorgegebenen Auszugslänge und der andere beginnend bei der ersten vorgegebenen Auszugslänge wirksam ist.

2. Trenneinrichtung nach Anspruch 1, **dadurch gekennzeichnet, dass** der andere Betriebszustand einen Auszugsbereich umfasst, der bei der ersten vorgegebenen Auszugslänge beginnt und an einer Stelle endet, die einer zweiten vorgegebenen Auszugslänge entspricht, die kürzer ist als die erste vorgegebene Auszugslänge.

3. Trenneinrichtung nach Anspruch 1, **dadurch gekennzeichnet, dass** bei der vorgegebenen Auszugslänge das Trenn-Netz (15) etwas länger ausgezogen ist als es zum Einhängen der Zugstange (16) in der Karosserie erforderlich ist.

4. Trenneinrichtung nach Anspruch 1, **dadurch gekennzeichnet, dass** die Antriebseinrichtung (18) wenigstens zwei Antriebsfedern (38,39,93) aufweist.

5. Trenneinrichtung nach Anspruch 1, **dadurch gekennzeichnet, dass** die Antriebsfedern (38,39,93) derart gestaltet sind, dass sie eine unterschiedliche Rückzugskraft erzeugen.

6. Trenneinrichtung nach Anspruch 1, **dadurch gekennzeichnet, dass** bei einer Auszugslänge des Trenn-Netzes (15) größer als die vorgegebene Auszugslänge lediglich die eine Feder (39) im Sinne der Erzeugung einer Rückzugskraft wirksam ist.

7. Trenneinrichtung nach Anspruch 1, **dadurch gekennzeichnet, dass** nach dem Überschreiten der vorgegebenen Auszugslänge die Antriebsfeder (38) mit der größeren Rückzugskraft unwirksam gemacht ist und lediglich die Antriebsfeder (39) mit der kleineren Rückzugskraft an der Wickelwelle (19) wirksam ist.

8. Trenneinrichtung nach Anspruch 1, **dadurch gekennzeichnet, dass** bei einer Auszugslänge des Trenn-Netzes (15) größer als die vorgegebene Auszugslänge beide Antriebsfedern (38,93) im Sinne der Erzeugung einer verminderten Rückzugskraft wirksam sind.

9. Trenneinrichtung nach Anspruch 1, **dadurch gekennzeichnet, dass** nach dem Überschreiten der vorgegebenen Auszuglänge die zweite Antriebsfeder (93) zusätzlich wirksam gemacht ist, derart dass sie die Rückzugskraft der ersten Antriebsfeder (38) teilweise aufhebt.

10. Trenneinrichtung nach Anspruch 1, **dadurch gekennzeichnet, dass** wenigstens eine der Antriebsfedern (38,39) durch eine Schraubenfeder gebildet ist, die in der Wickelwelle (19) untergebracht ist.

11. Trenneinrichtung nach Anspruch 1, **dadurch gekennzeichnet, dass** beide Antriebsfedern (38,39) Schraubenfedern sind, die in der Wickelwelle (19) untergebracht sind.

12. Trenneinrichtung nach Anspruch 1, **dadurch gekennzeichnet, dass** wenigstens ein der Antriebsfedern (93) durch eine Spiralfeder gebildet ist.

13. Trenneinrichtung nach Anspruch 12, **dadurch gekennzeichnet, dass** sich die Spiralfeder (93) neben der Wickelwelle (19) befindet.

14. Trenneinrichtung nach Anspruch 1, **dadurch gekennzeichnet, dass** die Antriebseinrichtung (18) eine Zähleinrichtung (76) für die Anzahl der Umdrehungen bzw. Teilumdrehungen der Wickelwelle (19) aufweist.

15. Trenneinrichtung nach Anspruch 1, **dadurch gekennzeichnet, dass** eine lösbare Sperreinrichtung (42) vorgesehen ist, die zumindest nach dem Erreichen der vorgegebenen Auszugslänge die Rückzugskraft von einer der Antriebsfedern (38) aufnimmt.

16. Trenneinrichtung nach den Ansprüchen 14 und 15, **dadurch gekennzeichnet, dass** die Sperreinrichtung (42) mit der Zähleinrichtung (74) zusammenwirkt.

17. Trenneinrichtung nach Anspruch 1, **dadurch gekennzeichnet, dass** eine lösbare Koppeleinrichtung (91) vorgehen ist, die nach dem Erreichen der vorgegebenen Auszugslänge die Rückzugskraft der einen Antriebsfeder (38) mit der Rückzugskraft der anderen Antriebsfeder (93) kombiniert.

18. Trenneinrichtung nach den Ansprüchen 14 und 17, **dadurch gekennzeichnet, dass** die Koppeleinrichtung (91) mit der Zähleinrichtung (76) zusammenwirkt.

19. Trenneinrichtung nach Anspruch 14, 15 oder 17, **dadurch gekennzeichnet, dass** die Sperreinrichtung (42) oder die Koppeleinrichtung (91) oder die Zähleinrichtung (76) eine Nut (76) und ein Abtastelement (74) aufweist, das in der Nut (76) läuft, und dass entweder die Nut (76) oder das Abtastelement (74) drehfest mit der Wickelwelle (19) verbunden sind.

20. Trenneinrichtung nach Anspruch 1, **dadurch gekennzeichnet, dass** eine der Antriebsfedern (93) mit der spiralförmigen Nut (76) gekoppelt ist.

21. Trenneinrichtung nach Anspruch 1, **dadurch gekennzeichnet, dass** die spiralförmige Nut (76) ortsfest in dem Gehäuse (14) angeordnet ist.

22. Trenneinrichtung nach Anspruch 1, **dadurch gekennzeichnet, dass** mit der Wickelwelle (19) ein Auslöseelement (86) für die Sperreinrichtung (42) drehfest verbunden ist.

23. Trenneinrichtung nach Anspruch 1, **dadurch gekennzeichnet, dass** ein Ende einer Antriebsfeder (38) mit einem Ende der anderen Antriebsfeder (39) über eine Kulisseneinrichtung (41) verbunden ist, die eine begrenzte Relativbewegung zwischen den so verbundenen Enden der Antriebsfedern (38,39) ermöglicht.

## Claims

1. Separating arrangement (9) for motor vehicles, in particular for estate vehicles, to prevent objects from being thrown from the boot or luggage area into the passenger compartment in the case of a front end collision,
with a housing (14), which has a run-out slot (17) extending parallel to the length of the housing (14),
with a winding shaft (19) rotatably disposed in the housing (14),
with a separation net (15), which extends through the run-out slot (17) and has two longitudinal edges spaced from one another, one of which edges being fastened to the winding shaft (19) and the other connected to a pull rod (16) to be suspended in the vehicle body, and
with a drive means (18) associated with the winding shaft (19) for biassing the winding shaft (19) in the direction of winding up the separation net (15) and as a result generating a retraction force for the separation net (15), wherein the drive means (18) has at least two operating modes, one of which corresponding to a stronger retraction force and the other to a weaker retraction force, and one of which modes being active in an initial range between the fully retracted position of the separation net (15) and as far as a first predetermined extension length and the other mode being active starting at the first predetermined extension length.

2. Separating arrangement according to Claim 1, **characterised in that** the other operating mode covers an extension range, which begins at the first predetermined extension length and ends at a location corresponding to a second predetermined extension length, which is shorter than the first predetermined extension length.

3. Separating arrangement according to Claim 1, **characterised in that** at the predetermined extension length the separation net (15) is extended to a slightly longer length than is required for suspending the pull rod (16) in the vehicle body.

4. Separating arrangement according to Claim 1, **characterised in that** the drive means (18) has at least two drive springs (38, 39, 93).

5. Separating arrangement according to Claim 1, **characterised in that** the drive springs (38, 39, 93) are configured such that they generate a different retraction force.

6. Separating arrangement according to Claim 1, **characterised in that** with an extension length of the separation net (15) greater than the predetermined extension length, only one spring (39) is active in the direction of generating a retraction force.

7. Separating arrangement according to Claim 1, **characterised in that** after the predetermined extension length is exceeded, the drive spring (38) with the higher retraction force is rendered inactive and only the drive spring (39) with the lower retraction force is active on the winding shaft (19).

8. Separating arrangement according to Claim 1, **characterised in that** with an extension length of the separation net (15) greater than the predetermined extension length, both drive springs (38, 93) are active in the direction of generating a reduced retraction force.

9. Separating arrangement according to Claim 1, **characterised in that** after the predetermined extension length is exceeded, the second drive spring (93) is additionally rendered active in such a manner that it partially raises the retraction force of the first drive spring (38).

10. Separating arrangement according to Claim 1, **characterised in that** at least one of the drive springs (38, 93) is formed by a helical spring, which is housed in the winding shaft (19).

11. Separating arrangement according to Claim 1, **characterised in that** both drive springs (38, 39) are helical springs, which are housed in the winding shaft (19).

12. Separating arrangement according to Claim 1, **characterised in that** at least one of the drive springs (93) is formed by a spiral spring.

13. Separating arrangement according to Claim 12, **characterised in that** the spiral spring (93) is located beside the winding shaft (19).

14. Separating arrangement according to Claim 1, **characterised in that** the drive means (18) has a counter (76) for the number of revolutions or partial revolutions of the winding shaft (19).

15. Separating arrangement according to Claim 1, **characterised in that** a releasable locking means (42) is provided, which absorbs the retraction force of one of the drive springs (38) at least after the predetermined extension length is reached.

16. Separating arrangement according to Claims 14 and 15, **characterised in that** the locking means (42) interacts with the counter (74).

17. Separating arrangement according to Claim 1, **characterised in that** a releasable coupling means (91) is provided, which combines the retraction force of one drive spring (38) with the retraction force of the other drive spring (93) after the predetermined extension length is reached.

18. Separating arrangement according to Claims 14 and 17, **characterised in that** the coupling means (91) interacts with the counter (76).

19. Separating arrangement according to Claim 14, 15 or 17, **characterised in that** the locking means (42) or the coupling means (91) or the counter (76) has a groove (76) and a scanning element (74), which runs in the groove (76), and that either the groove (76) or the scanning element (74) is connected to the winding shaft (19) to be fixed against rotation.

20. Separating arrangement according to Claim 1, **characterised in that** one of the drive springs (93) is coupled to the spiral-shaped groove (76).

21. Separating arrangement according to Claim 1, **characterised in that** the spiral-shaped groove (76) is arranged fixed in the housing (14).

22. Separating arrangement according to Claim 1, **characterised in that** a releasing element (86) for the locking means (42) is connected to the winding shaft (19) to be fixed against rotation.

23. Separating arrangement according to Claim 1, **characterised in that** an end of one drive spring (38) is connected to an end of the other drive spring (39) via a connecting link arrangement (41), which allows a restricted relative movement between the thus connected ends of the drive springs (38, 39).

## Revendications

1. Dispositif de séparation (9) pour véhicules, en particulier pour voitures automobiles de type break, destiné à empêcher lors d'une collision frontale que des objets placés dans le coffre ou l'espace à bagages soient projetés à l'intérieur de l'habitacle,
avec un boîtier (14) qui présente une fente de sortie (17) parallèle à la longueur dudit boîtier (14),
avec une barre d'enroulement (19) montée tournante dans le boîtier (14),
avec un filet de séparation (15) qui s'étend à travers la fente de sortie (17) et présente deux bords longitudinaux éloignés l'un de l'autre, dont l'un est fixé à la barre d'enroulement (19) et l'autre est lié à une barre de traction (16) qui peut être accrochée dans la carrosserie, et
avec un dispositif d'entraînement (18) associé à la barre d'enroulement (19) aux fins de précontraindre la barre d'enroulement (19) dans le sens d'un enroulement du filet de séparation (15) et ainsi de produire une force e rappel pour le filet de séparation (15),
le dispositif d'entraînement (18) présentant au moins deux états de fonctionnement parmi lesquels l'un correspond à une force de rappel plus élevée et l'autre à une force de rappel plus faible et parmi lesquels l'un des états de fonctionnement agit dans une portion de début depuis la position entièrement rentrée du filet de séparation (15) jusqu'à une première longueur déroulée donnée et l'autre dans une portion commençant à partir de la première longueur déroulée.

2. Dispositif de séparation selon la revendication 1, **caractérisé par le fait que** l'autre état de fonctionnement comprend une portion déroulée qui commence à partir de la première longueur déroulée prédéterminée et se termine en un point qui correspond à une deuxième longueur déroulée prédéterminée plus courte que la première longueur déroulée prédéterminée.

3. Dispositif de séparation selon la revendication 1, **caractérisé par le fait qu'**à la longueur déroulée prédéterminée le filet de séparation (15) est légèrement plus déroulé que cela est nécessaire pour l'accrochage de la barre de traction (16) sur la carrosserie.

4. Dispositif de séparation selon la revendication 1, **caractérisé par le fait que** le dispositif d'entraînement (18) comprend au moins deux ressorts d'entraînement (38, 39, 93).

5. Dispositif de séparation selon la revendication 1, **caractérisé par le fait que** les ressorts d'entraînement (38, 39, 93) sont agencés de manière telle qu'ils produisent des forces de rappel différentes.

6. Dispositif de séparation selon la revendication 1, **caractérisé par le fait que** pour une longueur déroulée du filet de séparation (15) supérieure à la longueur déroulée prédéterminée, l'un des ressorts (39) agit dans le sens de la production d'une force de rappel.

7. Dispositif de séparation selon la revendication 1, **caractérisé par le fait que** lorsque la longueur déroulée prédéterminée est dépassée, le ressort d'entraînement (38) avec la force de rappel plus élevée est désactivé et seul le ressort d'entraînement (39) avec la force de rappel plus faible agit sur la barre d'enroulement (19).

8. Dispositif de séparation selon la revendication 1, **caractérisé par le fait que** pour une longueur déroulée du filet de séparation (15) supérieure à la longueur déroulée prédéterminée, les deux ressorts d'entraînement (38, 93) sont actifs dans le sens de la production d'une force de rappel réduite.

9. Dispositif de séparation selon la revendication 1, **caractérisé par le fait que** lorsque la longueur déroulée prédéterminée est dépassée, le deuxième ressort d'entraînement (93) est rendu actif en complément de manière telle qu'il annule la force de rappel du premier ressort d'entraînement (38).

10. Dispositif de séparation selon la revendication 1, **caractérisé par le fait qu'**au moins un des ressorts d'entraînement (38, 39) est formé d'un ressort hélicoïdal qui est logé dans la barre d'enroulement (19).

11. Dispositif de séparation selon la revendication 1, **caractérisé par le fait que** les deux ressorts d'entraînement (38, 39) sont des ressorts hélicoïdaux qui sont logés dans la barre d'enroulement (19).

12. Dispositif de séparation selon la revendication 1, **caractérisé par le fait qu'**au moins un des ressorts d'entraînement (93) est formé d'un ressort spiral.

13. Dispositif de séparation selon la revendication 12, **caractérisé par le fait que** le ressort spiral est situé à côté de la barre d'enroulement (19).

14. Dispositif de séparation selon la revendication 1, **caractérisé par le fait que** le dispositif d'entraînement (18) comporte un dispositif de comptage (76) pour le nombre de révolutions ou de révolutions partielles de la barre d'enroulement (19).

15. Dispositif de séparation selon la revendication 1, **caractérisé par le fait qu'**il est prévu un dispositif de blocage (42) qui, au moins lorsque la longueur déroulée prédéterminée est atteinte, absorbe la force de rappel de l'un des ressorts d'entraînement (38).

16. Dispositif de séparation selon les revendications 14 et 15, **caractérisé par le fait que** le dispositif de blocage (42) coopère avec le dispositif de comptage (76).

17. Dispositif de séparation selon la revendication 1, **caractérisé par le fait qu'**il est prévu un dispositif de couplage (91) débrayable qui, lorsque la longueur déroulée prédéterminée est atteinte, combine la force de rappel de l'un (38) des ressorts d'entraînement à la force de rappel de l'autre (93) ressort d'entraînement.

18. Dispositif de séparation selon les revendications 14 et 17, **caractérisé par le fait que** le dispositif de couplage (91) coopère avec le dispositif de comptage (76).

19. Dispositif de séparation selon la revendication 14, 15 ou 17, **caractérisé par le fait que** le dispositif de blocage (42) ou le dispositif de couplage (91) ou le dispositif de comptage (76) comporte une rainure (76) ainsi qu'un élément palpeur (74) qui se déplace dans la rainure (76) et que, soit la rainure (76), soit l'élément palpeur (74) est solidaire en rotation de la barre d'enroulement (19).

20. Dispositif de séparation selon la revendication 1, **caractérisé par le fait que** l'un (93) des ressorts d'entraînement est couplé à la rainure en forme de spirale (76).

21. Dispositif de séparation selon la revendication 1, **caractérisé par le fait que** la rainure en forme de spirale (76) est stationnaire dans le boîtier (14).

22. Dispositif de séparation selon la revendication 1, **caractérisé par le fait qu'**un dispositif de déclenchement (86) pour le dispositif de blocage (42) est solidaire en rotation de la barre d'enroulement (19).

23. Dispositif de séparation selon la revendication 1, **caractérisé par le fait qu'**une extrémité d'un ressort d'entraînement (38) est liée à une extrémité de l'autre ressort d'entraînement (39) par l'intermédiaire d'un système de coulisse (41), qui permet un déplacement relatif limité entre les extrémités ainsi liées des ressorts d'entraînement (38, 39).
